(19) Europäisches Patentamt
European Patent Office
Office européen des brevets

(11) **EP 1 528 293 B1**

(12) **EUROPÄISCHE PATENTSCHRIFT**

(45) Veröffentlichungstag und Bekanntmachung des Hinweises auf die Patenterteilung:
**06.08.2014   Patentblatt 2014/32**

(51) Int Cl.:
*F16H 61/02* *(2006.01)*

(21) Anmeldenummer: **04104743.2**

(22) Anmeldetag: **29.09.2004**

(54) **Verfahren zum Steuern eines automatischen Getriebes für ein Kraftfahrzeug**

Method of controlling an automatic vehicle transmission

Méthode de commande d'une transmission automatique de véhicule

(84) Benannte Vertragsstaaten:
**DE FR**

(30) Priorität: **31.10.2003   DE 10350893**

(43) Veröffentlichungstag der Anmeldung:
**04.05.2005   Patentblatt 2005/18**

(73) Patentinhaber: **Continental Automotive GmbH 30165 Hannover (DE)**

(72) Erfinder: **Nelles, Oliver 93055, Regensburg (DE)**

(56) Entgegenhaltungen:
**DE-C1- 19 501 315     DE-C2- 19 752 623
US-A- 4 789 936     US-A- 5 272 631**

EP 1 528 293 B1

**Beschreibung**

Die Erfindung betrifft ein Verfahren zum Steuern eines automatischen Getriebes für ein Kraftfahrzeug. Bei einem solchen Verfahren wird durch Vergleichen des Arbeitspunktes des Kraftfahrzeugantriebs mit gespeicherten Schaltkennlinien jeweils ein Zielgang für das Getriebe ermittelt. Ein solches Verfahren ist aus der gattungsgemäßen DE 197 52 623 C2 bekannt.

Eine bekannte Steuerung für ein automatisches Kraftfahrzeuggetriebe weist Kennfeldspeicher auf, in denen das Schaltverhalten des Getriebes abhängig von Betriebsparametern des Kraftfahrzeugs in Form von Kennlinien abgelegt ist (DE 197 52 623 C2). Automatische Doppelkupplungsgetriebe können ohne Antriebsunterbrechung und ohne Verspannung geschaltet werden (vgl. ATZ Automobiltechnische Zeitschrift 101 (1999) Heft 5, Seiten 350-357). Durch Umkehren der üblichen Reihenfolge beim Schalten - Auskuppeln, Schalten, Einkuppeln - wird der Synchronisierungsvorgang, indem erst geschaltet und dann gekuppelt wird, mit der Vorwahl des nächsten Ganges verbunden und damit der Gangwechsel von dem Synchronisierungsvorgang freigehalten.

Bei manchen automatischen Getriebetypen wie dem Doppelkupplungsgetriebe sind einige Gangwechsel, zum Beispiel Doppelschaltungen, bei denen zwei Gänge auf einmal hoch- oder rückgeschaltet werden, nachteilig gegenüber anderen Gangwechseln, zum Beispiel Einfach- und Dreifachschaltungen. Sich ergebende Schwierigkeiten können sein: Zugkraftunterbrechung oder längere Schaltzeiten (einer dieser Nachteile ist beim Doppelkupplungsgetriebe in Kauf zu nehmen) oder ähnliches.

Der Erfindung liegt die Aufgabe zu Grunde, diese Schwierigkeiten zu vermeiden oder zumindest deren Auftretenshäufigkeit zu reduzieren, indem durch eine in der Getriebesteuerung ablaufende Schaltstrategie geeignete Funktionen bereit gestellt werden. Sie ist insbesondere für Doppelkupplungsgetriebe und diesen ähnliche Getriebe vorgesehen. Unter "ähnlich" sind Getriebe zu verstehen, die für manche Schaltungen (von einigen Gängen in vorgegebene andere Gänge) konstruktionsbedingt Eigenschaften aufweisen, die eine Verwendung einer anderen Schaltstrategie sinnvoll erscheinen lassen. Zum Beispiel können dies AT- und AMT-Getriebe sein, bei denen typischerweise bestimmte Schaltungen zu einem früheren Zeitpunkt während des Schaltablaufs, als dies bei anderen Schaltungen der Fall ist, nicht mehr abgebrochen werden können.

Diese Aufgabe wird erfindungsgemäß durch ein Verfahren nach Anspruch 1 gelöst. Dazu werden durch Interpolation zwischen benachbarten Schaltkennlinien, die gemäß einer vorgegebenen Schaltstrategie durchgeführt wird, neue Schaltkennlinien berechnet, und der jeweilige Zielgang wird durch Vergleichen des Arbeitspunktes des Kraftfahrzeugantriebs mit den neuen Schaltkennlinien festgelegt.

Zweckmäßige Weiterbildungen der Erfindung sind in den Unteransprüchen niedergelegt.

Die Vorteile der Erfindung liegen insbesondere darin, dass die höheren Kosten, Gewicht und Verschleiß, die sich bei Lösungen der genannten Schwierigkeiten durch eine Änderung der mechanischen Konstruktion des Getriebes ergeben, vermieden werden.

Ausführungsbeispiele der Erfindung werden im folgenden anhand der Zeichnung erläutert. Es zeigen:

Figuren 1 bis 4    vier zum Erläutern des erfindungsgemäßen Verfahrens dienende Diagramme, und

Figur 5    ein Ablaufdiagramm eines bei dem erfindungsgemäßen Verfahren abgearbeiteten Programms.

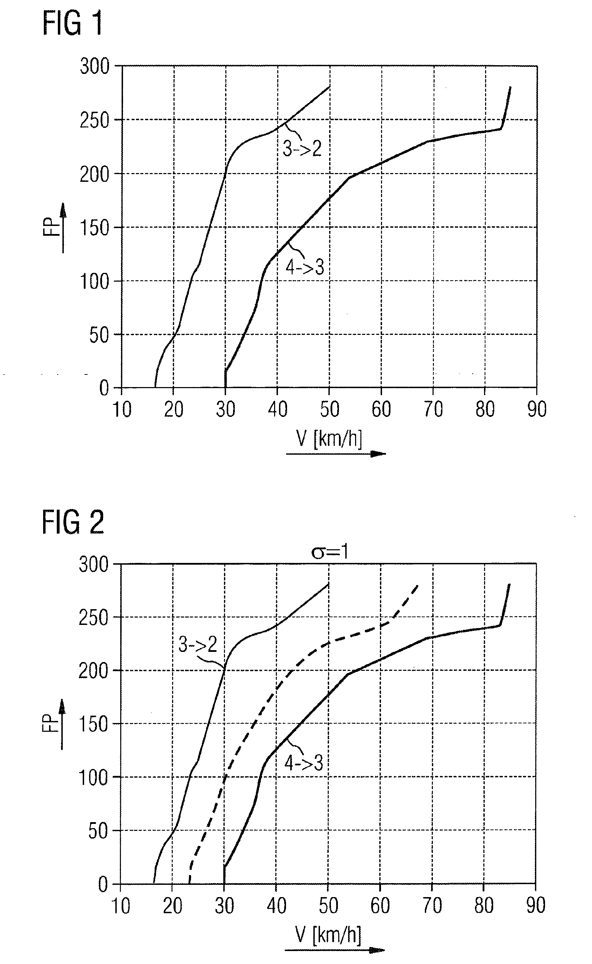

Die Diagramme der Figuren 1 bis 4 stellen in einer Getriebesteuerung abgelegte Kennfelder dar, die jeweils eine Mehrzahl von Schaltkennlinien enthalten. Jede Schaltstrategie basiert auf solchen Schaltkennlinien. Diese legen fest, in welchen Arbeitspunkten des Fahrzeuges in welchen Gang geschaltet wird. Vorliegend ist der Arbeitspunkt durch die Kombination Fahrzeuggeschwindigkeit v und Fahrpedalstellung FP definiert, es sind aber auch andere Definitionen, basierend zum Beispiel auf Drehmomenten oder Leistungen, möglich.

Auf der Abszisse der vier Diagramme ist die Fahrzeuggeschwindigkeit v in km/h und auf der Ordinate die Fahrpedalstellung oder -auslenkung FP in einer - sich aus einem Messverfahren ergebenden - dimensionslosen Einheit aufgetragen ist. Physikalisch entspricht diese einem prozentualen Wert einer vorgegebenen Auslenkung. Überschreitet der Arbeitspunkt des Kraftfahrzeugantriebs eine Schaltkennlinie, schaltet das Getriebe in einen anderen Gang. Zur besseren Übersichtlichkeit sind in den Diagrammen nur einige zur Erläuterung der Ausführungsbeispiele nötige Rückschaltkennlinien dargestellt. Eine Schaltkennlinie "3->2" steuert eine Rückschaltung von dem dritten in den zweiten Gang, eine Schaltkennlinie "4->3" eine Rückschaltung von dem vierten in den dritten Gang und so weiter.

Um die Anzahl von nachteiligen Schaltungen zu verringern, werden bei dem erfindungsgemäßen Verfahren die Schaltkennlinien in Abhängigkeit von dem jeweiligen Gang derart modifiziert, dass die Bereiche der Arbeitspunkte des Fahrzeuges, welche zu einer nachteiligen Schaltung führen würden, verkleinert werden. Dies bedeutet beispielsweise im Falle eines Doppelkupplungsgetriebes folgendes: Fährt das Kraftfahrzeug im 5. Gang und gibt der Fahrer Gas, würde normalerweise der Arbeitspunkt zum Beispiel die "5->4"- und die "4->3"-, aber nicht die "3->2"-Schaltkennlinie kreuzen, so dass eine "5->3"-Schaltung erfolgen würde. Ein neuer Arbeitspunkt irgendwo in dem großen Bereich zwischen der "4->3"- und "3->2"- Schalkennlinie (Figur 1) führt zu so einer - für das Doppelkupplungsgetriebe nachteiligen - Doppelrückschaltung.

Bei einer Fahrt in einem anderen Gang und bei Hochschaltungen statt Rückschaltungen gilt entsprechendes. Wesentliches Element des erfindungsgemäßen Verfahrens ist es, die Bereiche zwischen den Schaltkennlinien zu verkleinern, die - abhängig von dem aktuellen Gang - zu einer nachteiligen Schaltung führen würden, falls der Arbeitspunkt dort hinein wechselt.

Die Art oder das Ausmaß, wie stark die Bereiche zwischen den Schaltkennlinien verkleinert werden, wird schaltungsabhängig gemacht, indem Hoch- und Rückschaltungen anders behandelt werden oder auch jede Schaltung individuell durchgeführt wird. Eine "5->3"-Schaltung beispielsweise wird anders als eine "4->2"- und anders als eine "3->1"-Schaltung durchgeführt usw. Dies wird mit der schaltungsabhängigen Festlegung und Speicherung von nachfolgend zu erläuternden Parametern σ und α realisiert.

In den Diagrammen der Figuren 1 bis 4 haben die unterschiedlich gezeichneten Schaltkennlinien folgende Bedeutung:

- dünne durchgehende Linie = originale "3->2"-Rückschaltkennlinie
- dicke durchgezogene Linie = originale "4->3"-Rückschaltkennlinie
- gestrichelte Linie = neue "4->3"-Rückschaltkennlinie
- gepunktete Linie: neue "3->2"-Rückschaltkennlinie

Anmerkung: In Figur 2 liegen die gepunktete und die gestrichelte Linie deckungsgleich übereinander.

Bei einem Ausführungsbeispiel der Erfindung wird die Häufigkeit von Doppelrückschaltungen aus dem 5. in den 3. Gang verringert. Für ein Doppelkupplungsgetriebe sind in der Regel alle x-fach Schaltungen mit geraden Werten von x nachteilig. Dies gilt sowohl für Hochschaltungen als auch für Rückschaltungen. Damit ergeben sich für ein 5-Gang-Doppelkupplungsgetriebe folgende nachteilige Schaltungen:

| | |
|---|---|
| Fahrt im 5. Gang | "5->3"-, "5->1"-Schaltung |
| Fahrt im 4. Gang | "4->2"-Schaltung |
| Fahrt im 3. Gang | "3->1"-, "3->5"- Schaltung |
| Fahrt im 2. Gang | "2->4"-Schaltung |
| Fahrt im 1. Gang | "1->3"-, "1->5"-Schaltung |

Hiervon wird wie oben erwähnt der Fall einer Doppelrückschaltung bei Fahrt im 5. Gang als Beispiel eingehend beschrieben. Die sich ergebenden Tabellen lassen sich leicht auf andere Gangzahlen oder auf Getriebe mit anderen nachteiligen Schaltungen anpassen.

Dazu ist der Bereich zwischen der "4->3"- und der "3->2"-Schaltkennlinie zu verkleinern. Im Extremfall würden beide Schaltkennlinien aufeinander fallen und der Bereich dazwischen verschwinden. Dann wäre eine "5->3"-Schaltung unmöglich, weil gleichzeitig mit dem Kreuzen der "4->3"- auch die "3->2"-Schaltkennlinie gekreuzt würde. Somit erfolgt entweder eine "5->4"- oder gleich eine "5->2"-Schaltung.

Um alle Varianten von "keine Änderung" bis zu dem Extremfall "Doppelschaltung unmöglich" abzudecken wird ein erster Parameter σ (= Sigma) - auch als Interpolations-Parameter bezeichnet - eingeführt. σ = 0 entspricht dem Fall "keine Änderung", σ = 1 dem Fall "Doppelschaltung unmöglich"; dazwischen sind beliebige Abstufungen möglich.

Eine vorteilhafte Möglichkeit den Bereich zwischen der "4->3"- und "3->2"-Schaltkennlinie zu verkleinern ist, beide Schaltkennlinien nach folgender Interpolationsformel auf neue Schaltkennlinien abzubilden, die wohlgemerkt nur für die Fahrt im 5. Gang gelten:

$$neue\ 4 \rightarrow 3 = (alte\ 4 \rightarrow 3) * (1 - \sigma/2) + (alte\ 3 \rightarrow 2) * \sigma/2 \qquad (\text{I})$$

$$neue\ 3 \rightarrow 2 = (alte\ 3 \rightarrow 2) * (1 - \sigma/2) + (alte\ 4 \rightarrow 3) * \sigma/2 \qquad (\text{II})$$

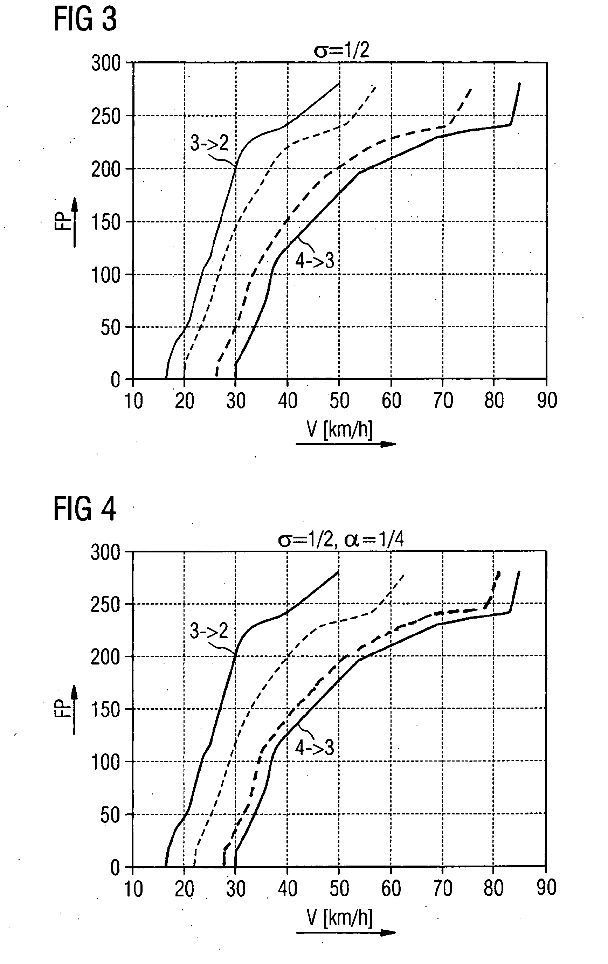

Für σ = 0 ergeben sich die neuen gleich den alten Schaltkennlinien. Für σ = 1 fallen die beiden neuen Schaltkennlinien aufeinander und berechnen sich aus dem Mittelwert der beiden alten Schaltkennlinien (50:50). Mit dem Parameter σ lässt sich also der Bereich zwischen den Schaltkennlinien stufenlos zwischen "keine Änderung" und Null einstellen. Diese Vorgehensweise ist in Figur 1 (σ = 0), Figur 2 (σ = 1) und Figur 3 (σ = 1/2) veranschaulicht.

Für den allgemeinen Fall gelten folgende Interpolationsformeln, wobei eine Variable n die Werte 1, 2 und 3 annehmen kann:

$$neue\ 2n \rightarrow (2n-1) = (alte\ 2n \rightarrow (2n-1))*(1-\sigma/2) + (alte\ (2n-1) \rightarrow n))*\sigma/2$$

$$\text{(Ia)}$$

$$neue\ (2n-1) \rightarrow n = (alte\ (2n-1) \rightarrow n)*(1-\sigma/2) + (alte\ 2n \rightarrow (2n-1))*\sigma/2$$

$$\text{(IIa)}$$

Wird zum Definieren des Arbeitspunkts der Zusammenhang Fahrzeuggeschwindigkeit / Fahrpedalstellung verwendet, kann die vorstehende Interpolationsformel für die Fahrzeuggeschwindigkeit oder die Fahrpedalstellung oder aber für eine Kombination aus beiden berechnet werden. Bei anderen Definitionen des Arbeitspunktes ergibt sich Entsprechendes. Einzelheiten hängen von der jeweiligen Implementierung der Schaltkennlinien in der Schaltstrategie ab.

Statt der vorstehenden Interpolationsformeln gibt es auch andere Rechenvorschriften, die den Bereich zwischen den beiden Schaltkennlinien verkleinern, zum Beispiel in Form einer Verschiebung. Eine Interpolation ist aber der vorteilhafteste Ansatz, weil selbst stark unterschiedlich geformte Schaltkennlinien für $\sigma = 1$ exakt aufeinander zu liegen kommen und damit den Bereich auf Null reduzieren. Dies ist bei anderen Rechenvorschriften gar nicht oder nur umständlich zu erreichen.

Bei den vorstehenden Interpolationsformeln sind beide Schaltkennlinien gleichberechtigt, d.h. für $\sigma = 1$ fallen sie genau in der Mitte der alten Schaltkennlinien aufeinander. Mit einem Häufigkeits-Parameter $\alpha$, der zwischen $-\sigma$ und $+\sigma$ liegt, kann die Interpolation zu folgenden Formeln erweitert werden:

$$neue\ 4 \rightarrow 3 = (alte\ 4 \rightarrow 3)*(1-(\sigma+\alpha)/2) + (alte\ 3 \rightarrow 2)*(\sigma+\alpha)/2 \qquad \text{(III)}$$

$$neue\ 3 \rightarrow 2 = (alte\ 3 \rightarrow 2)*(1-(\sigma-\alpha)/2) + (alte\ 4 \rightarrow 3)*(\sigma-\alpha)/2 \qquad \text{(IV)}$$

Hiermit ist es möglich für Werte $\alpha > 0$ die "4->3"-Schaltkennlinie überzugewichten und für Werte $\alpha < 0$ die "3->2"-Schaltkennlinie überzugewichten. Für $\alpha = 0$ ergeben sich wieder die vereinfachten Interpolationsformeln. Mit der Wahl von $\alpha$ lässt sich einstellen, wie die Häufigkeit von "5->4"-Schaltungen im Vergleich zu "5->2"-Schaltungen verteilt werden soll. Für $\alpha=0$ wird der ursprüngliche Bereich zwischen "4->3"(alt)- und "3->2"(alt)-Schaltungen halbe-halbe in "5->4"- und "5->2"-Schaltungen aufgeteilt. Für $\alpha < 0$ wird ein größerer Teil des Bereiches den "5->4"-Schaltungen zugeteilt, für $\alpha > 0$, zum Beispiel $\alpha = 1/4$ (Figur 4), wird ein größerer Teil des Bereiches den "5->2"-Schaltungen zugeteilt. Negative Werte von $\alpha$ führen daher tendenziell zu "zähem" Fahrverhalten (zu großer Gang wird öfter verwendet). Positive Werte von $\alpha$ führen dagegen tendenziell zu "hyper-aktivem" Fahrverhalten (zu kleiner Gang wird öfter verwendet).

Für den allgemeinen Fall gelten folgende Interpolationsformeln, wobei n die Werte 1, 2 und 3 annehmen kann:

$$neue\ 2n \rightarrow (2n-1) = (alte\ 2n \rightarrow (2n-1))*(1-(\sigma+\alpha)/2) + (alte\ (2n-1) \rightarrow n)*(\sigma+\alpha)/2$$

$$\text{(IIIa)}$$

$$neue\ (2n-1) \rightarrow n = (alte\ (2n-1) \rightarrow n)*(1-(\sigma-\alpha)/2) + (alte\ 2n \rightarrow (2n-1))*(\sigma-\alpha)/2$$

$$\text{(IVa)}$$

In Figur 1 sind zwei "alte", das heißt nicht erfindungsgemäß veränderte, "4->3- und "3->2"-Schaltkennlinien dargestellt. Der Bereich zwischen diesen beiden Schaltkennlinien wird erfindungsgemäß verkleinert.

Im Falle extrem veränderter Schaltkennlinien, das heißt bei $\sigma=1$ (Figur 2), liegen die beiden neuen Schaltkennlinien übereinander in der Mitte des Bereichs, der Bereich ist sozusagen eliminiert.

Im Falle einer weniger extremen Wahl des Parameters $\sigma$, das heißt etwa bei $\sigma=1/2$ (Figur 3), wird der Bereich teilweise verkleinert, die beiden Schaltkennlinie rücken aufeinander zu.

Durch die Wahl eines positiven Wert des Parameters $\alpha$, zum Beispiel $\alpha=1/4$ (Figur 4), wird die Häufigkeit der "5->2"-Schaltungen erhöht und die der "5->4"-Schaltungen verringert, wie aus den verschieden breiten Bereichen des Diagramms ersichtlich ist.

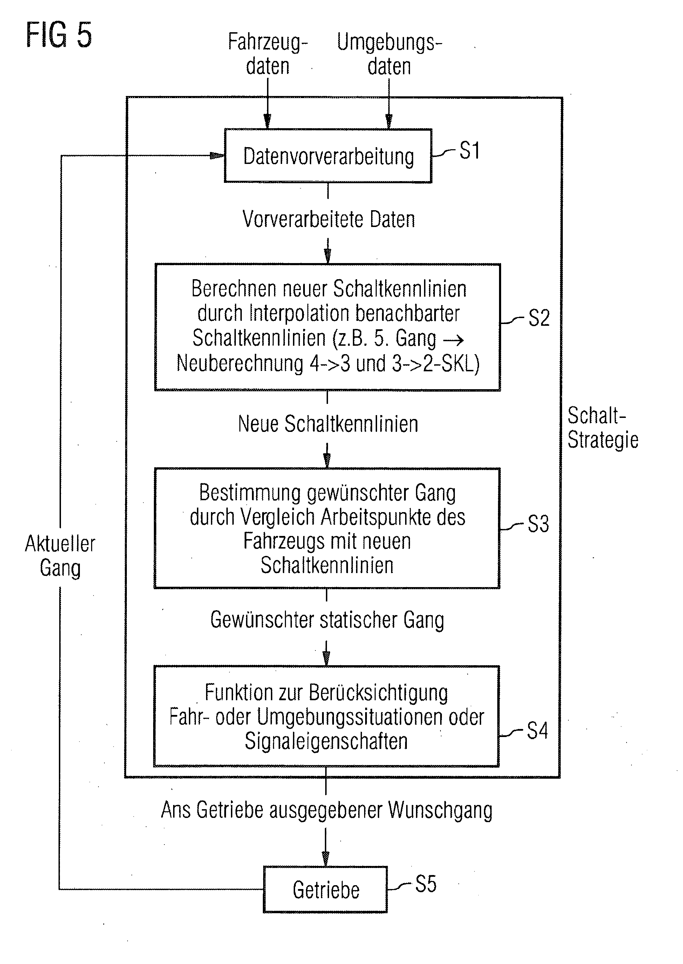

Das aus Figur 5 ersichtliche Ablaufdiagramm eines bei dem erfindungsgemäßen Verfahren abgearbeiteten Programms stellt die Schaltstrategie eines Doppelkupplungsgetriebes oder eines ähnlichen Getriebes dar. Es schließt folgende Programmschritte ein:

In einem ersten Schritt

**S1** werden Fahrzeugdaten und Umgebungsdaten eingelesen und diese Daten vorverarbeitet. Aus den vorverarbeiteten Daten werden in einem Schritt

**S2** neue Schalkennlinien durch Interpolation zwischen benachbarten Schaltkennlinien berechnet. Wenn zum Beispiel aktuell der 5. Gang eingelegt ist, werden die "4->3"- und die "3->2" - Schaltkennlinien berechnet. In einem Schritt

**S3** wird durch einen Vergleich des Arbeitspunktes des Kraftfahrzeugantriebs mit den neuen Schalkennlinien der gewünschte Gang bestimmt. Dieser stellt einen statischen Wert dar, der in einem Schritt

**S4** gegebenenfalls noch anderen Funktionen unterworfen wird, mit denen vorliegende Fahrsituationen, Umgebungssituationen oder Signaleigenschaften berücksichtigt werden. Der sich ergebende Zielgang (oder auch Wunschgang) wird in einem Schritt

**S5** in dem Getriebe geschaltet, und er wird schließlich als aktueller Gang zu der Datenvorverarbeitung (Schritt S1) rückgeführt.

Damit ist ein Programmdurchlauf des Verfahrens abgeschlossen. Das Programm wird danach zyklisch wiederholt.

## Patentansprüche

1.  Verfahren zum Steuern eines automatischen Getriebes für ein Kraftfahrzeug, bei dem durch Vergleichen des Arbeitspunktes des Kraftfahrzeugantriebs mit gespeicherten Schaltkennlinien innerhalb eines Kennfeldes jeweils ein Zielgang für das Getriebe ermittelt wird, **dadurch gekennzeichnet, dass** durch eine Interpolation zwischen benachbarten Schaltkennlinien innerhalb des Kennfeldes, die gemäß einer vorgegebenen Schaltstrategie durchgeführt wird, neue Schaltkennlinien berechnet werden, dass der jeweilige Zielgang durch Vergleichen des Arbeitspunktes des Kraftfahrzeugantriebs mit den neuen Schaltkennlinien festgelegt wird, und **dass** die Schaltkennlinien in Abhängigkeit von dem jeweiligen Gang derart modifiziert werden, dass die Bereiche der Arbeitspunkte des Fahrzeuges, welche zu einer nachteiligen Schaltung führen würden, verkleinert werden.

2.  Verfahren nach Anspruch 1 , **dadurch gekennzeichnet, dass** der Bereich zwischen zwei benachbarten Schaltkennlinien dadurch verkleinert wird, dass die Verkleinerung des Bereiches zwischen den Schaltkennlinien abhängig von der jeweiligen Schaltung und Schaltungsart erfolgt.

3.  Verfahren nach Anspruch 2 , **dadurch gekennzeichnet, dass** beide Schaltkennlinien nach einer Interpolationsformel jeweils auf eine neue Schaltkennlinie abgebildet werden, wobei ein erster Parameter ($\sigma$) mit Werten zwischen null und eins verwendet wird.

4.  Verfahren nach Anspruch 2 , **dadurch gekennzeichnet, dass** die Häufigkeitsverteilung von geradzahligen Schaltungen aus einem vorliegenden Gang mit einem zweiten Parameter ($\alpha$) eingestellt wird.

5.  Verfahren nach Anspruch 3 , **dadurch gekennzeichnet, dass** beide Schaltkennlinien nach folgenden Interpolationsformeln

$$neue\ 2n \rightarrow (2n-1) = (alte\ 2n \rightarrow (2n-1)) * (1 - \sigma/2) + (alte\ (2n-1) \rightarrow n)) * \sigma/2$$

$$neue\ (2n-1) \rightarrow n = (alte\ (2n-1) \rightarrow n) * (1 - \sigma/2) + (alte\ 2n \rightarrow (2n-1)) * \sigma/2$$

abgebildet werden, wobei n die Werte 1, 2, 3... annehmen kann.

6.  Verfahren nach Anspruch 3 und 4 , **dadurch gekennzeichnet, dass** die Häufigkeitsverteilung von geradzahligen Schaltungen gemäß folgender Interpolationsformeln eingestellt wird:

$$neue\ 2n \rightarrow (2n-1) = (alte\ 2n \rightarrow (2n-1)) * (1-(\sigma+\alpha)/2) + (alte\ (2n-1) \rightarrow n) * (\sigma+\alpha)/2$$

$$neue\ (2n-1) \rightarrow n = (alte\ (2n-1) \rightarrow n) * (1-(\sigma-\alpha)/2) + (alte\ 2n \rightarrow (2n-1)) * (\sigma-\alpha)/2$$

wobei n die Werte 1, 2, 3... annehmen kann.

## Claims

1. Method for controlling an automatic vehicle transmission, in the case of which a target gear speed for the transmission is respectively determined by comparing the operating point of the motor vehicle drive with stored gear change characteristic curves within a characteristic diagram, **characterized in that** by means of an interpolation between adjacent gear change characteristic curves within the characteristic diagram, which is carried out in accordance with a prescribed gear changing strategy, new gear change characteristic curves are calculated, **in that** the respective target gear speed is fixed by comparing the operating point of the motor vehicle drive with the new gear change characteristic curves, and **in that** the gear change characteristic curves are modified as a function of the respective gear in such a way as to reduce the operating point ranges of the vehicle which would lead to a disadvantageous gear change.

2. Method according to Claim 1, **characterized in that** the range between two adjacent gear change characteristic curves is reduced by reducing the range between the gear change characteristic curves as a function of the respective gear change and type of gear change.

3. Method according to Claim 2, **characterized in that** the two gear change characteristic curves are respectively mapped in accordance with an interpolation formula onto a new gear change characteristic curve, a first parameter ($\sigma$) with values between zero and one being used.

4. Method according to Claim 2, **characterized in that** the frequency distribution of even-numbered gear changes on a current gear is set with the aid of a second parameter ($\alpha$).

5. Method according to Claim 3, **characterized in that** the two gear change characteristic curves are mapped in accordance with the following interpolation formulae

$$new\ 2n \rightarrow (2n-1) = (old\ 2n \rightarrow (2n-1)) * (1-\sigma/2) + (old\ (2n-1) \rightarrow n)) * \sigma/2$$

$$new\ (2n-1) \rightarrow n = (old\ (2n-1) \rightarrow n) * (1-\sigma/2) + (old\ 2n \rightarrow (2n-1)) * \sigma/2,$$

n being able to assume the values 1, 2, 3 ....

6. Method according to Claims 3 and 4, **characterized in that** the frequency distribution of even-numbered gear changes is set in accordance with the following interpolation formulae:

$$new\ 2n \rightarrow (2n-1) = (old\ 2n \rightarrow (2n-1)) * (1-(\sigma+\alpha)/2) + (old\ (2n-1) \rightarrow n) * (\sigma+\alpha)/2$$

$$new\ (2n-1) \rightarrow n = (old\ (2n-1) \rightarrow n) * (1-(\sigma-\alpha)/2) + (old\ 2n \rightarrow (2n-1)) * (\sigma-\alpha)/2,$$

n being able to assume the values 1, 2, 3 ....

**Revendications**

1. Procédé servant à commander une transmission automatique destinée à un véhicule automobile, dans le cadre duquel on détermine respectivement un rapport cible pour la transmission en comparant le point de fonctionnement de l'entraînement de véhicule automobile et les caractéristiques de changement de vitesses mémorisées dans des données caractéristiques, **caractérisé en ce qu'**on calcule de nouvelles caractéristiques de changement de vitesses par interpolation entre des caractéristiques de changement de vitesses voisines au sein des données caractéristiques, laquelle est effectuée conformément à une stratégie prédéfinie de changement de vitesses, **en ce que** le rapport cible respectif est déterminé en comparant le point de fonctionnement de l'entraînement de véhicule automobile et les nouvelles caractéristiques de changement de vitesses, et **en ce que** les caractéristiques de changement de vitesses sont modifiées en fonction du rapport respectif de telle manière qu'on réduit les plages des points de fonctionnement du véhicule, lesquelles conduiraient à un changement de vitesses désavantageux.

2. Procédé selon la revendication 1, **caractérisé en ce qu'**on réduit la plage entre deux caractéristiques voisines de changement de vitesses, **en ce que** la réduction de la plage entre les caractéristiques de changement de vitesses dépend du changement de vitesses ou du type de changement de vitesses respectif.

3. Procédé selon la revendication 2, **caractérisé en ce que** les deux caractéristiques de changement de vitesses sont reproduites selon une formule d'interpolation respectivement sur une nouvelle caractéristique de changement de vitesses, sachant qu'on utilise un premier paramètre ($\sigma$) présentant des valeurs comprises entre zéro et un.

4. Procédé selon la revendication 2, **caractérisé en ce que** la distribution des fréquences de vitesses paires est réglée à partir d'un rapport présent avec un deuxième paramètre ($\sigma$).

5. Procédé selon la revendication 3, **caractérisé en ce que** les deux caractéristiques de changement de vitesses sont reproduites selon les formules d'interpolation qui suivent

```
nouvelle 2n → (2n − 1) = (ancienne 2n → (2n -1)) x (1 −
            σ/2) + (ancienne (2n − 1) → n)) x σ/2
```

```
nouvelle (2n − 1) → n = (ancienne (2n − 1) → n) x (1 −
            σ/2) + (ancienne 2n → (2n -1)) x σ/2,
```

n pouvant prendre les valeurs 1, 2, 3, etc.

6. Procédé selon la revendication 3 et 4, **caractérisé en ce que** la distribution de fréquences de vitesses paires est réglée selon les formules d'interpolation qui suivent :

```
nouvelle 2n → (2n − 1) = (ancienne 2n → (2n -1)) x (1 −
        (σ + α)/2) + (ancienne (2n − 1) → n) x (σ + α)/2
```

```
nouvelle (2n − 1) → n = (ancienne (2n − 1) → n) x (1 −
        (σ + α)/2) + (ancienne 2n → (2n -1)) x (σ − α)/2,
```

n pouvant prendre les valeurs 1, 2, 3, etc.

# FIG 1

# FIG 2

## FIG 3

## FIG 4

# FIG 5

Fahrzeugdaten    Umgebungsdaten

```
        │              │
        ▼              ▼
┌──────────────────────────┐
│   Datenvorverarbeitung   │──S1
└──────────────────────────┘
            │
    Vorverarbeitete Daten
            │
            ▼
┌──────────────────────────┐
│ Berechnen neuer Schaltkennlinien │
│ durch Interpolation benachbarter │──S2
│ Schaltkennlinien (z.B. 5. Gang → │
│ Neuberechnung 4->3 und 3->2-SKL) │
└──────────────────────────┘
            │
    Neue Schaltkennlinien
            │
            ▼
┌──────────────────────────┐
│ Bestimmung gewünschter Gang │
│ durch Vergleich Arbeitspunkte des │──S3
│ Fahrzeugs mit neuen │
│ Schaltkennlinien │
└──────────────────────────┘
            │
    Gewünschter statischer Gang
            │
            ▼
┌──────────────────────────┐
│ Funktion zur Berücksichtigung │
│ Fahr- oder Umgebungssituationen oder │──S4
│ Signaleigenschaften │
└──────────────────────────┘
```

Schalt-
Strategie

Aktueller
Gang

Ans Getriebe ausgegebener Wunschgang

```
┌──────────┐
│ Getriebe │──S5
└──────────┘
```

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19752623 C2

### In der Beschreibung aufgeführte Nicht-Patentliteratur

- *ATZ Automobiltechnische Zeitschrift,* 1999, vol. 101 (5), 350-357